# EUROPEAN PATENT APPLICATION

(11) **EP 1 179 718 A1**
(43) Date of publication of application: **13.02.2002**
(21) Application number: 01118500.6
(22) Date of filing: 01.08.2001
(51) Int. Cl.: F26B 5/04, F16K 51/02

(54) **Valve device to regulate the flow of a fluid between a suction means and a controlled pressure closed environment, such as a dryer or similar**

(30) Priority: 08.08.2000 IT UD000152
(71) Applicant: Incoma Srl, 36016 Thiene (VI) (IT)
(72) Inventor: Casasola, Luciano, 33170 Pordenone (IT)
(74) Representative: Petraz, Gilberto Luigi

(57) **Abstract**

Device to regulate the flow of a fluid between a suction means (13) and a controlled pressure closed environment (16), such as a dryer or similar, comprising a valve (11) positioned between the suction means (13) and the closed environment (16); the valve in turn comprises a shutter element (22), able to selectively interrupt the flow of fluid, commanded by an actuator (27), connected to a sensor (28) which detects the pressure inside the closed environment (16); a control unit (29) is connected to the sensor (28) to selectively activate the actuator (27) according to the pressure detected inside the closed environment (16).

## Description

### FIELD OF THE INVENTION

The invention concerns a valve device to regulate the flow of a fluid, consisting for example of air or steam, between a pipe, connected to a suction pump, and a controlled pressure closed environment such as a dryer or similar. The valve comprises a shutter connected to an actuator, which is commanded by control means connected to a pressure sensor. The device is advantageously employed in dryers for fabrics, hides or similar, where the drying process normally occurs at a determinate sub-atmospheric pressure of between 10 and 100 millibars.

### BACKGROUND OF THE INVENTION

It is well-known that in dryers it is very important to keep the internal pressure at a set level, usually between 10 and 100 millibars, and that, in order to achieve such environmental conditions with a sub-atmospheric pressure, suction pumps are used which are able to create a depression which can reach several millibars.

To regulate and maintain the pressure inside the dryer at a set value, the so-called "set point", which as we know varies according to the drying cycle and the material to be dried, until now complex and costly devices have been used which, according to the actual pressure detected by a sensor inside the dryer itself, act on the suction pump so as to control the functioning thereof, either starting it or stopping it according to the pressure (or depression) detected.

Such known devices have the disadvantage, however, that they subject the suction pump, and the electric motor connected thereto, to almost continuous stress, with frequent stops and starts, so that they are subject to break easily.

Moreover, in these known devices there is a certain delay between the detection of anomalous pressure, that is, above or below the set point pressure, and the start/stop of the pump, so that in many cases it is not possible to efficiently control the pressure inside the dryer.

There are also valves with a preloaded spring, wherein the shutter element opens automatically when the force exerted by the pressurized fluid is greater than that of the spring. Such valves are not very precise, however, and not very sensitive, they have a very large hysteresis and do not allow the spring which controls the shutter element to be easily calibrated.

The present Applicant has devised, designed and perfected a device to regulate the flow of a fluid, such as air or steam, between a suction pipe and a controlled pressure environment, such as a dryer or similar, according to the invention, to overcome the shortcomings of conventional devices and valves.

### SUMMARY OF THE INVENTION

The device according to the invention is set forth and characterized in the main claim, while the dependent claims describe other innovative characteristics of the invention.

One purpose of the invention is to achieve a device to regulate the flow of a fluid, particularly air or steam, between a suction pipe and a controlled pressure closed environment, such as a dryer or similar, which will be simple and reliable and which will allow to keep the pressure inside the environment to be controlled as near as possible to the set point pressure, without needing to intervene often on the suction means represented by the pump and the motor associated therewith.

In accordance with this purpose, the device according to the invention comprises a valve, positioned between the suction means and the closed environment to be controlled. Said valve in turn comprises shutter means able to selectively interrupt the flow of fluid and commanded by actuation means connected with sensor means able to detect the pressure inside said closed environment. Control means connected to said sensor means are provided to selectively activate the actuation means according to the pressure detected inside the closed environment, or when the pressure has reached a pre-set value.

The valve comprises a shutter disk arranged transverse to the flow of said fluid, inside a substantially cylindrical container, which is arranged between a first pipe connected to a suction pump and a second pipe connected to the closed environment.

The actuation means comprise an actuator having a rod connected to the shutter disk, advantageously by means of an articulation, to allow the shutter disk to rest on the entire circumference of a sealing ring. Both the rod and the body of the actuator are arranged substantially perpendicular to the shutter disk.

A small hole, about a millimetre in diameter, is made on the pipe which puts the valve into communication with the closed environment. This hole is normally closed by a mechanism which can be selectively opened by the control means to put the inside of this pipe into communication with the outside environment, when the pressure inside the closed environment is below a pre-set value.

### BRIEF DESCRIPTION OF THE DRAWINGS

These and other characteristics of the invention will be apparent from the following description of a preferred form of embodiment of a device according to the invention, given as a non-restrictive example with the aid of the attached drawings wherein:
- Fig. 1: shows a general diagram of an application of a device according to the invention;
- Fig. 2: is a front view, enlarged and partly in section, of a device according to the invention.

### DETAILED DESCRIPTION OF A PREFERRED EMBODIMENT

With reference to the attached drawings, a device 10 according to the invention comprises a valve 11 positioned between a suction pipe 12, in turn connected to a suction pump 13 of a known type, and a pipe 15 connected to a closed environment 16, such as for example a dryer or similar, in which the pressure has to be kept at a pre-set level, indicatively between 10 and 100 millibars.

The valve 11 comprises a substantially cylindrical container 17, arranged between a first flange 18 attached to the end of the suction pipe 12, and a second flange 19, attached to the pipe 15. Bolts 20 clamp the container 17 between the two flanges 18 and 19, which are thus substantially parallel to each other.

The container 17 defines inside itself a cavity 21 inside which a shutter disk 22 is arranged, substantially parallel to the flanges 18 and 19, and able to cooperate with a sealing ring 23, of the O-ring type, in order to interrupt and regulate the flow of air between the pump 13 and the closed environment 16.

The shutter disk 22 is connected, advantageously by means of an articulation 25, to the lower end of a rod 26 of a cylindrical actuator 27, for example of the pneumatic type. The rod 26 and the body of the actuator 27 are arranged substantially perpendicular to the shutter disk 22.

A pressure sensor 28, consisting for example of an electronic manometer of a known type, is arranged on the pipe 15 or, alternately, directly in the closed environment 16, to detect the value of the pressure in said environment.

The sensor 28 is connected to a control unit with a microprocessor 29, for example of the PLC type, which in turn is able to command the actuator 27 and the shutter disk 22 associated therewith.

A small hole 30, about a millimetre in diameter, is advantageously made on the pipe 15, which has a diameter of several centimetres. This hole 30 is normally closed by a mechanism 31, which can be of any known type and which can be selectively opened by the control unit 29, in order to put in communication the inside of the pipe 15 with the outside environment, where the pressure is atmospheric pressure.

The device 10 as described heretofore functions as follows.

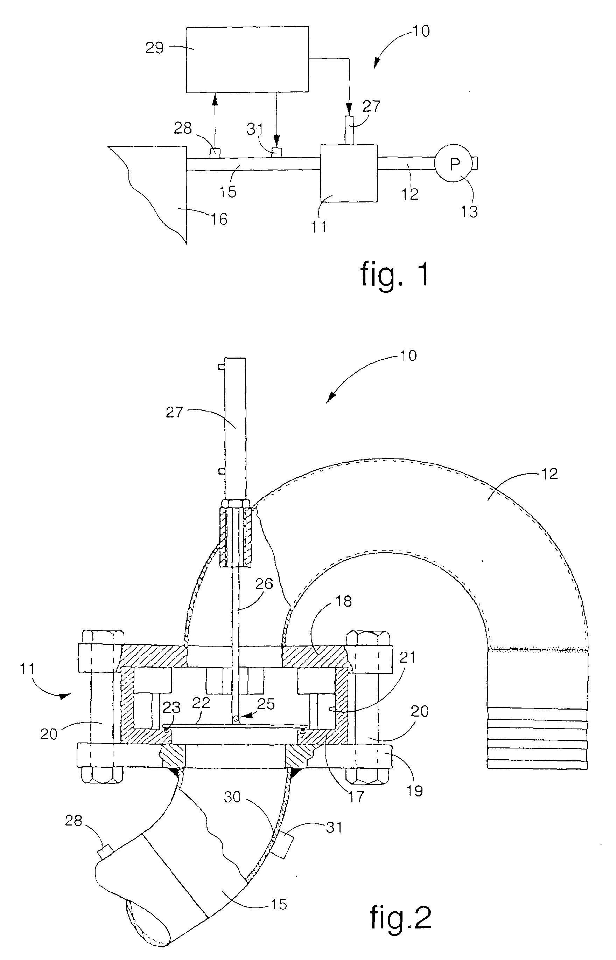

In the inactive condition the shutter disk 22 is in contact with the sealing ring 23, in the position shown in Fig. 2.

When the pressure inside the closed environment 16 is to be lowered to a determinate value, the suction pump 13 is started and the actuator 27 is actuated to allow the shutter disk 22 to be raised, aided by the flow of air which flows from the pipe 15 to the pipe 12.

When the sensor 28 detects that the pressure inside the pipe 15, and hence of the environment 16 too, has reached the desired value, the control unit 29 commands the shutter disk 22 to be closed by means of the actuator 27, against the action of the flow of air created by the suction of the pump 13. This closure occurs quickly so that, even if it continues to function, the pump 13 does not further modify the pressure conditions inside the closed environment 16.

If the pressure inside the closed environment 16 should, for any reason, rise above the desired value, the control unit 29 again commands the shutter disk 22 to be raised, by means of the actuator 27.

If however the pressure inside the closed environment 16 should fall below the desired value, the control unit 29 commands the hole 30 to open, by means of the mechanism 31.

It is clear that modifications and additions can be made to the valve device as described heretofore without departing from the spirit and scope of the invention.

It is also clear that, although the invention has been described with reference to a specific example, a skilled person in the art shall certainly be able to achieve many other equivalent forms of valve device to regulate the flow of a fluid between a suction means and a controlled pressure environment, such as a dryer or similar, all of which shall come within the field of the present invention.

## Claims

1. Device to regulate the flow of a fluid between a suction means (13) and a controlled pressure closed environment (16), such as a dryer or similar, comprising a valve (11) positioned between said suction means (13) and said closed environment -(16), **characterized in that** said valve (11) comprises shutter means (22), able to selectively interrupt the flow of said fluid, commanded by actuation means (27), which are associated with sensor means (28) able to detect the pressure inside said closed environment (16), control means (29) connected to said sensor means (28) being provided to selectively activate said actuator means (22) according to the pressure detected inside said closed environment (16).

2. Device as in claim 1, **characterized in that** said shutter means comprise a shutter disk (22) arranged transverse to the flow of said fluid.

3. Device as in claim 2, **characterized in that** said valve (11) comprises a substantially cylindrical container (17), arranged between a first suction pipe (12) and a second pipe (15) connected to said closed environment (16), clamping means (20) being able to clamp said container (17) between said first and said second pipe (12, 15).

4. Device as in claim 3, **characterized in that** said container (17) comprises inside itself a cavity (21) inside which said shutter disk (22) is arranged and **in that** a sealing ring (23) is assembled inside said cavity (21) to cooperate with said shutter disk (22).

5. Device as in claim 2, **characterized in that** said actuation means comprise an actuator (27) having a rod (26) connected to said shutter disk (22).

6. Device as in claim 5, **characterized in that** said rod (26) is connected to said shutter disk (22) by means of an articulation (25).

7. Device as in claim 5, **characterized in that** said rod (26) and the body of said actuator (27) are arranged substantially perpendicular to said shutter disk (22).

8. Device as in claim 1, **characterized in that** said sensor means (28) comprise an electronic manometer arranged in said closed environment (16) or on the pipe (15) which connects said closed environment (16) to said valve (11).

9. Device as in claims 5 and 8, **characterized in that** said control means comprise a microprocessor unit (29) connected to said electronic manometer (28) and to said actuator (27).

10. Device as in claim 1, **characterized in that** a small hole (30), with a diameter of about one millimetre, is made on the pipe (15) which puts into communication said valve (11) and said closed environment (16), said hole (30) being normally closed by a mechanism (31) which can be selectively opened by said control means (29) in order to put into communication the inside of said pipe (15) with the outside environment when the pressure inside said closed environment (16) is below a pre-determined value.
